(19) Europäisches Patentamt
European Patent Office
Office européen des brevets

(11) Veröffentlichungsnummer: **0 113 047**
**B1**

(12) # EUROPÄISCHE PATENTSCHRIFT

(45) Veröffentlichungstag der Patentschrift: **14.10.87**

(21) Anmeldenummer: **83111889.8**

(22) Anmeldetag: **28.11.83**

(51) Int. Cl.⁴: **C 08 G 59/14**, C 08 G 59/62, C 08 G 59/18, C 09 D 5/44, C 09 D 3/58

(54) **Verfahren zur Herstellung von Polyadditionsprodukten und ihre Verwendung als wasserdispergierbare Bindemittel für kationische Elektrotauchlacke.**

(30) Priorität: **04.12.82 DE 3244990**

(43) Veröffentlichungstag der Anmeldung: **11.07.84 Patentblatt 84/28**

(45) Bekanntmachung des Hinweises auf die Patenterteilung: **14.10.87 Patentblatt 87/42**

(84) Benannte Vertragsstaaten: **AT BE CH DE FR GB IT LI NL SE**

(56) *Entgegenhaltungen:*
**EP-A-0 041 619**
**EP-A-0 059 895**
**US-A-4 316 784**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Schupp, Eberhard, Dr., Tilsiter Weg 4, D-6830 Schwetzingen (DE)**
Erfinder: **Loch, Werner, Dr., In der Bleiche 2, D-6701 Erpolzheim (DE)**
Erfinder: **Osterloh, Rolf, Dr., Am Wehrhaus 16 a, D-6718 Gruenstadt (DE)**

**EP 0 113 047 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft ein Verfahren zur Herstellung von Polyadditionsprodukten, die nach Protonierung mit Säuren wasserdispergierbare Bindemittel für kationische Elektrotauchlacke ergeben.

In der DE-OS 30 21 300 wird ein Verfahren zur Herstellung von härtbaren, stickstoffbasische Gruppen tragenden Polyadditionsprodukten beschrieben, bei dem an Phenole, welche ungesättigte Amidomethylgruppen tragen, Amine addiert werden und anschließend mit Epoxidverbindungen umgesetzt wird. Lerartige Polyadditionsprodukte sind auch als Bindemittel für kationische Elektrotauchlacke geeignet und besitzen bereits eine Reihe von sehr guten Eigenschaften, we hohen Umgriff und ausgezeichneten Korrosionsschutz.

In der EP-A-59 895 werden wasserdispergierbare Bindemittel für kationische Elektrotauchlacke beschrieben, die Reaktionsprodukte von (A) niedermolekularer, aromatische Gruppen enthaltenden Epoxidharzen, (B) polyfunktioneller Alkoholen oder Carbonsäuren mit einem Molekulargewicht unter 350, sowie gegebenenfalls (C) bis zu 60 Gew% polyfunktionellen Alkoholen, Carbonsäuren und/oder SH-Verbindungen mit einem Molekulargewicht von 500 bis 5000 und (D) primären, sekundären und/oder tertiären Aminen und/oder deren Salzen oder einer Sulfid/Säuremischung oder einer Phosphin/Säuremischung sind, wobei das Umsetzungsprodukt aus (A) und (B) einen Gehalt an aromatischen Gruppen von 10 bis 45 % enthält.

Aufgabe der vorliegenden Erfindung ist es, ein Verfahren aufzuzeigen, bei dem weiter verbesserte Bindemittel erhalten werden, die sich vor allem durch hohe Dispersionsstabilität der daraus hergestellten Lackbäder und die Elastizität der eingebrannten Lackfilme auszeichnet.

Gegenstand der vorliegenden Erfindung ist ein Verfahren zur Herstellung von härtbaren, stickstoffbasische Gruppen tragenden Polyadditionsprodukten, die nach Protonierung mit Säuren wasserdispergierbar und als Bindemittel für kationische Elektrotauchlacke geeignet sind, wobei die Polyadditionsprodukte aus

(A) Mono- und/oder Polyphenolen, welche am aromatischen Kern Gruppierungen der allgemeinen Formel (I)

$$-CH_2-NH-\overset{O}{\overset{\|}{C}}-CR^1{=}CHR^2 \qquad (I)$$

tragen, worin $R^1$ und $R^2$ untereinander gleich oder verschieden sind und für Wasserstoff oder eine Methylgruppe stehen,

(B) Aminen mit mindestens einer primären und/oder sekundären Aminogruppe und

(C) Epoxidverbindungen mit einem Molekulargewicht von maximal 5000 hergestellt werden, die Komponenten (A) und (C) in solchen Mengen eingesetzt werden, daß das Verhältnis der phenolischen Hydroxylgruppen von (A) zu Epoxidgruppen von (C) 1:0,5 bis 1:2,5 beträgt und das Amin (B) in einer solchen Menge eingesetzt wird, daß das resultierende Polyadditionsprodukt aus (A), (B) und (C) 0,1 bis 5 Gew.% basischen Stickstoff enthält, und entweder zuerst Komponente (A) mit Komponente (B) zur Reaktion gebracht wird und das erhaltene Reaktionsprodukt dann mit Komponente (C) umgesetzt wird, oder zuerst Komponente (A) mit Komponente (C) zur Reaktion gebracht und das erhaltene Reaktionsprodukt dann mit Komponente (B) umgesetzt wird, das dadurch gekennzeichnet ist, daß man als Epoxidverbindungen (C) Umsetzungsprodukte aus aromatischen Epoxidharzen und polyfunktionellen Alkoholen, Carbonsäuren und/oder SH-Verbindungen verwendet, wobei diese polyfunktionellen Alkohole, Carbonsäuren und/oder SH-Verbindungen Molekulargewichte zwischen 530 und 3000 aufweisen und mit den aromatischen Epoxidharzen in solchen Mengenverhältnissen umgesetzt worden sind, daß auf jede Epoxidgruppe 0,1 bis 0,77 Hydroxyl-, Carboxyl- oder SH-Gruppen oder Gemische dieser Gruppen kommen.

Bevorzugt werden zur Herstellung der Komponente (C) die aromatischen Epoxidharze mit Diolen mit zwei primären Hydroxylgruppen, insbesondere Polyether-, Polyester-, Polyamid- oder Polyurethandiolen umgesetzt. Als aromatische Epoxidharze werden vorzugsweise Diglycidylether des Bisphenol A, erhalten aus Bisphenol A und Epichlorhydrin, verwendet.

Gegenstand der vorliegenden Erfindung ist außerdem die Verwendung der erfindungsgemäß hergestellten Produkte zur Herstellung von Überzügen sowie insbesondere in ihrer durch Zusatz von Säuren erhaltenen protonierten Form als Bindemittel für die kathodische Elektrotauchlackierung von Metallteilen.

Nach dem erfindungsgemäßen Verfahren werden Bindemittel erhalten, die durch den Einbau polyfunktioneller Alkohole, Carbonsäuren bzw. SH-Verbindungen in der Kette zwischen aromatischen Epoxidharzsegmenten besonders gut haftende, elastische Lackfilme ergeben. Gleichzeitig führt das erfindungsgemäße Herstellungsverfahren dazu, daß die die Aminogruppen tragenden Phenole, also die Träger der elektrischen Ladung, am Kettenende sitzen, wodurch besonders gute Dispersionsstabilität erreicht wird.

Bezüglich der Herstellung und Aufbaukomponenten der erfindungsgemäßen Bindemittel ist im einzelnen folgendes auszuführen:

(A) Die Mono- und/oder Polyphenole (A) tragen als Substituenten am aromatischen Kern Gruppen der allgemeinen Formel (I)

$$-CH_2-NH-\overset{O}{\overset{\|}{C}}-CR^1=CHR^2 \qquad (I),$$

worin $R^1$ und $R^2$ umtereinander gleiche oder verschiedene Reste bedeuten und für Wasserstoff oder eine Methylgruppe stehen. Bevorzugt sind Gruppen der Formel (I), bei denen $R^1$ Wasserstoff oder eine Methylgruppe und $R^2$ Wasserstoff bedeuten. Hergestellt werden können diese α,β-ungesättigte Amidomethylgruppen tragenden Mono- und/oder Polyphenole z. B. aus Phenolen bzw. Polyphenolen und Verbindungen der Formel

$$X-CH_2-NH-\overset{O}{\overset{\|}{C}}-CR^1=CHR^2 \qquad (II),$$

worin X für OH, Halogen, wie z. B. Chlor, oder eine Alkoxygruppe mit 1 bis 8, vorzugsweise 1 bis 4 Kohlenstoffatomen steht und $R^1$ und $R^2$ die oben angegebene Bedeutung haben.

Als Phenole sind Mono- und/oder Polyphenole, vor allem Phenol selbst geeignet, auch Diphenole, wie z. B. 2,2-Bis-p-Hydroxyphenylpropan (Bisphenol A). Wird eine weitere Plastifizierung erwünscht, können auch Alkylphenole wie p-Octyl-, p-Nonylphenol oder Cardanol verwendet werden. Cardanol ist ein Naturprodukt und besteht aus einem Gemisch langkettiger 2-Alkylenphenole mit etwa 13 bis 17 Kohlenstoffatomen im Alkylenrest, z. B. 3-(8,11-Pentadekadienyl)-phenol. Bedingt durch diese Alkylenketten führt die Mitverwendung von Cardanol zu Bindemitteln, mit denen besonders elastische Überzüge hergestellt werden können.

Die Umsetzung der Phenole mit den Verbindungen der Formel (II) kann in einem weiten Temperaturbereich, z. B. bei Temperaturen von -10 bis +160°C, gegebenenfalls in Gegenwart von Lösungsmittel, wie Toluol, Xylol, Isobutanol, Ethylglykol, Ethylhexanol etc. durchgeführt werden.

Bei Verwendung von starken Säuren wie HCl oder Schwefelsäure als Katalysatoren zur Herstellung der Komponente (A) kann bei Tempersturen um 0°C gearbeitet werden, mit schwächer sauren Katalysatoren können Temperaturen bis etwa 160°C nötig sein. Es ist auch möglich, Verbindumgen der Fornel (II) in situ herzustellen und mit dem betreffenden Phenol umzusetzen. So läßt sich zum Beispiel anstelle von Methylolacrylamid eine Mischung aus Acrylamid, Paraformaldehyd und Phenol in Gegenwart katalytischer Mengen Schwefelsäure zu Phenol mit α,β-olefinisch ungesättigten Amidomethylgruppen im aromatischen Kern umsetzen.

Bei der Umsetzung von Phenolen mit Verbindungen der Formel (II) kommt es zu einer Abspaltung von HX und einer Amidomethylierung am aromatischen Kern des Phenols. Derartige Reaktionen sind als Tscherniac-Einhorn-Reaktionen bekannt. Die Einführung von Gruppierungen der Formel (I) findet dabei bevorzugt in p- bzw. o-Stellung zur phenolischen Hydroxylgruppe statt. Dabei können sämtliche o- und p-Stellungen besetzt werden, bei reinem Phenol (Hydroxybenzol) können also 3 Gruppierungen der Formel (I) eingeführt werden. Im allgemeinen genügt es jedoch, wenn 1 bis 2,5 ungesättigte Gruppen eingebaut werden, um eine optimale Vernetzungsdichte im fertigen Lackfilm zu erzielen.

(B) Als erfindungsgemäß zu verwendende Amine (B) kommen übliche primäre und/oder sekundäre Anime, z. B. solche der allgemeinen Formel $H_2N-R^3$ bzw.

$$HN\begin{matrix}\diagup R^3\\ \diagdown R^4\end{matrix}$$

in Frage, worin $R^3$ und $R^4$ gleiche oder verschiedene Alkylgruppen mit 1 bis 18 Kohlenstoffatomen, Ethanol-, Isopropanolreste bedeuten oder $R^3$ und $R^4$ miteinander einen 5- oder 6-gliedrigen Ring bilden.

Beispiele von primären und sekundären Aminen, die eingesetzt weràen können, sind Mono- und Dialkylamine wie Methylamin, Ethylamin, Propylamin, Isopropylamin, Butylamin, Isobutylamin, Dimethylamin, Diethylamin, Dipropylamin, Dibutylamin, Pyrrolidin, Piperidin, Morpholin etc. Die Amine können auch zusätzliche funktionelle Gruppen, wie Hydroxylgruppen tragen, z. B. Alkanolamine mit 2 bis 4 Kohlenstoffatomen in den Alkanolgruppen, wie Ethanolamin, Isopropanolamin, 3-Aminopropanol, Diethanolamin, Diisopropanolamin, Methylethanolamin, Ethylethanolamin und dgl.

Auch Amine mit mehreren basischen Stickstoffatomen können eingesetzt werden, z. B. 3-Dimethylaminopropylamin, 3-Diethylaminopropylamin, Piperazin, N-Methylpiperazin etc. Im allgemeinen werden niedermolekulare Amine verwendet, doch können auch Amine mit höherem Molekulargewicht eingesetzt werden, insbesondere dann, wenn die weichmachende Wirkung dieser Amine erwünscht ist. Es kann auch eine Mischung von nidermolekularen und höhermolekularen Aminen eingesetzt werden.

(C) Die erfindungsgemäß zu verwendenden Expoxidverbindungen mit einem Molekulargewicht von maximal 5000 sind Umsetzungsprodukte von aromatischen Epoxidharzen mit polyfunktionellen Alkoholen, Carbonsäuren und/oder SH-Verbindungen, wobei diese polyfunktionellen Verbindungen Molekulargewichte zwischen 150 und 3000 aufweisen.

Als aromatische Epoxidharze sind besonders die Diglycidether von Bisphenol A mit einem Molekulargewicht von 350 bis 2000, welche aus Bisphenol A und Epichlorhydrin in Gegenwart von Alkali hergestellt werden können, geeignet. Die aromatischen Epoxidharze werden mit den polyfunktionellen Alkoholen, Carbonsäuren und/oder SH-Verbindungen in einem Äquivalenzverhältnis Expoxidgruppe zu OH-, SH- oder COOH-Gruppe von 10/1 bis 1,3/1, vorzugsweise 4/1 bis 1,5/1 umgesetzt. Geeignete polyfunktionelle Alkohole, Carbonsäure und SH-Verbindungen haben ein Molekulargewicht von 150 bis 3000, bevorzugt von 530 bis 2000. Die hier in Betracht kommenden Polyole schließen Diole, Triole und höhere polymere Polyole wie Polyesterpolyole, Polyetherpolyole ein. Besonders bevorzugt sind Polyesterpolyole und unter ihnen die Polycaprolactonpolyole.

Geeignete Polyalkylenetherpolyole entsprechen z. B. der folgenden Formel:

$$H-\left[O-CHR(CH_2)_n\right]_m-OH$$

in der R für Wasserstoff oder eine niedrigen Alkylrest mit bis zu 4 Kohlenstoffatomen steht, n = 1 bis 5 und m = 10 bis 50 oder noch höher ist. Beispiele sind Poly(oxytetramethylen)glykole und Poly(oxyethylen)glykole.

Die bevorzugten Polyalkylenetherpolyole sind Poly(oxytetramethylen)glykole mit einem Molekulargewicht im Berich von 500 bis 3000.

Die Polyesterpolyole können ebenfalls als polymere Polyolkomponente erfindungsgemäß verwendet werden. Man kann die Polyesterpolyole durch Polyveresterung von organischen Polycarbonsäuren oder ihren Anhydriden mit organischen Polyolen herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure und Glutarsäure. Anstelle dieser Säuren können auch ihre Anhydride, soweit diese existieren, verwendet werden.

Ferner lassen sich bei der Erfindung auch Polyesterpolyole, die sich von Lactonen ableiten, benutzen. Diese Produkte erhält man z. B. durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart endständiger Hydroxylgruppen und durch wiederkehrende Polyesteranteile, die sich von dem Lacton ableiten, aus. Diese wiederkehrenden Molekülanteile können der Formel

$$-\overset{O}{\overset{\|}{C}}-(CHR)_n-CH_2O-$$

entsprechen, in der n mindestens 4, bevorzugt 4 bis 6, ist und der Substituent R Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden:

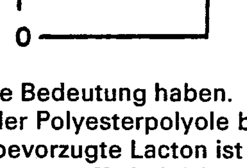

in der n und R die oben bereits angegebene Bedeutung haben.

Die bei der Erfindung für die Herstellung der Polyesterpolyole bevorzugten Lactone sind die ε-Caprolactone, bei denen n den Wert 4 hat. Das besonders bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele vom zur Umsetzung mit Lactonen geeigneten aliphatischen Diolen schließen ein Ethylenglykol, 1,3-Propandiol, 1,4-Butandiol, 1,4-Cyclohexandimethanol. Ein Beispiel eines geeigneten aliphatischen Triols ist Trimethylolpropan. Die bevorzugten Polycaprolactonpolyole haben Molekulargewichte im Bereich von 530 bis 3000.

Als polyfunktionelle SH-Verbindungen zur Herstellung der Komponente (C) kommen z. B. Umsetzungsprodukte von organischen Dihalogeniden mit Natriumpolysulfid in Betracht. Weitere SH-Verbindungen sind z. B. Umsetzungsprodukte von hyroxylgruppenhaltigen, linearen Polyestern, Polyethern oder Polyurethanen mit Mercaptocarbonsäuren wie Mercaptoessigsäure, 2-Mercaptopropionsäure, 3-Mercaptopropionsäure, Mercaptobuttersäure und ähnliche.

Erfindungsgemäß werden die Komponenten (A) und (C) in solchen Mengen eingesetzt, daß das Verhältnis der phenolischen Hydroxylgruppen der Komponente (A) zu Epoxidgruppen der Komponente (C) 1:0,5 bis 1:2,5 beträgt. Wird als Komponente (A) ganz oder überwiegend ein Polyphenol, z. B. ein Diphenol verwendet, so wird die Epoxidverbindung (C) im Unterschuß verwendet, d.h. man wird ein Verhältnis phenolische OH-Gruppe zu Epoxidgruppen nahe 1/0,5 wählen. Setzt man dagegen als Komponente (A) ein Monphenol ein, so kann ein Überschuß an Epoxidgruppen nützlich sein, vor allem dann, wenn Epoxidgruppen durch Nebenreaktionen verbraucht werden.

Die Anlagerung der Amine (B) an die Doppelbindungen der Mono- und/oder Polyphenole (A), welche Gruppierungen der Formel (I) tragen bzw., an die Doppelbindungen der Reaktionsprodukte aus den Komponenten (A) und (C), kann durch einfaches Vermischen der Komponenten (A) und (B) erfolgen, im allgemeinen ist jedoch eine Erwärmung auf 50 bis 110°C zweckmäßig, um die Additionsgeschwindigkeit zu beschleunigen. Die Menge an eingesetztem Amin bestimmt den Gehalt an basischem Stickstoff im fertigen Bindemittel. Sie wird im allgemeinen so gewählt, daß das Bindemittel etwa 0,1 bis 5, vorzugsweise 0,75 bis 3 Gew.% basischen Stickstoff enthält. Die Reaktion wird zweckmäßigerweise in Lösungsmitteln, z. B. in Alkoholen wie Isopropanol, n-Butanol oder iso-Butanol, in Kohlenwasserstoffen wie Benzol oder Toluol, oder in einem anderen technischen Lösungsmittel oder Lösungsmittelgemisch, welches die Komponenten löst, durchgeführt. Die Umsetzung der phenolischem Hydroxylgruppen der Komponente (A) mit den Epoxidgruppen der Komponemte (C) kann vor oder nach der Addition des Amins (B) an die Doppelbindungen erfolgen. Im letzteren Falle genügt das anwesende Amin oftmals als Katalysator für die Reaktion zwischen Phenol und Epoxid, im ersteren Falle muß eine geringe Menge, z. B. 0,1 bis 3 Gew.%, bezogen auf die Summe der Einsatzstoffe, eines Katalysators, z. B. eines tertiären Amins oder eines Phosphins zugegeben werden.

Die Reaktion wird zweckmäßigerweise bei Temperaturen von 50 bis 110°C durchgeführt. Das Fortschreiten der Reaktion kann durch Bestimmung der noch vorhandenen Epoxid- oder Phenolgruppen oder durch Messung der Viskosität erfolgen.

Eine andere Möglichkeit, das erfindungsgemäße Herstellverfahren durchzuführen, besteht in der gleichzeitigen Zugabe von Amin (B) und Epoxidverbindung (C) zu den Mono- und/ oder Polyphenolen (A), die Gruppierungen der Formel (I) tragen. Auch in diesem Fall kommt es zunächst in einer raschen und exothermen Reaktion zur Addition der Amine an die ungesättigten Gruppen der Phenole, während die nachfolgende Reaktion der phenolischen OH-Gruppen mit den Epoxidgruppen viel langsamer abläuft. Bei dieser gleichzeitigen Zugabe kann es in einem gewissen Umfang auch zu einer Addition von Amin an Epoxidgruppen kommen, was die Qualität und Verwendbarkeit des hergestellten Polyadditionsprodukts im allgemeinen nicht beeinträchtigt.

Die erfindungsgemäß hergestellten Bindemittel härten beim Erhitzen auf 170 bis 190°C ohne Zusatz von Härtungskatalysatoren unter Bildung von elastischen, lösungsmittelfesten Filmen aus. Werden Bindemittel mit einem niedrigen Acrylamidgehalt verwendet, so kann es vorteilhaft sein, zusätzliche zur Vernetzung befähigte Verbindungen zuzusetzen.

Als solche kommen z. B. polyfunktionelle phenolische Mannichbasen, die z. B. aus Polyphenolen, Formaldehyd und sekundären Aminen hergestellt werden können, in Betracht. Auch Phenol- bzw. Amin-Formaldehydharze oder Harze, welche polymerisierbare Doppelbindungen enthalten, können verwendet werden. Auch Verbindungen, welche 2 oder mehr β-Hydroxyestergruppen enthalten, können mitverwendet werden, sofern gleichzeitig ein Umesterungskatalysator wie z. B. ein Blei-, Zinn- oder Zinksalz eingesetzt wird. Die Mitverwendung solcher zur Vernetzung befähigter Verbindungen erlaubt es in vielen Fällen, die Einbrenntemperatur auf 150 bis 160°C zu senken.

Eine weitere Methode, die Vernetzungsaktivität zu steigern und damit zu harten, lösemittelfesten Beschichtungen bei niedrigen Einbrenntemperaturen zu kommen, ist der Zusatz wasser- oder öllöslicher Salze von sikkativierend wirkenden Metallen wie Blei, Kobalt oder Mangan. Diese werden allein oder in Mischungen eingesetzt, wobei Mengen von 50 ppm bis 5 % Metallsalz, bezogen auf Bindemittelfeststoff, eingesetzt werden können.

Die erfindungsgemäßen Bindemittel lassen sich nach Protonierung mit Säuren, wie z. B. Phosphorsäure und ihren Derivaten, vorzugsweise mit wasserlöslichen Carbonsäuren, wie z. B. Essigsäure, Ameisensäure oder Milchsäure, mit Wasser verdünnen und zur kathodischen Elektrotauchlackierung elektrisch leitender Flächen, z. B. von Metallteilen, Blechen usw. aus Messing, Kupfer, Aluminium, Eisen und Stahl, die gegebenenfalls chemisch vorbehandelt, z. B. phosphatiert sind, verwenden.

Die wäßrigen Lösungen oder Dispersionen der zumindest teilweise als Salz einer wasserlöslichen Carbonsäure vorliegenden erfindungsgemäßen Polyadditionsprodukte können auch im Gemisch mit diesen durch Kataphorese elektrophoretisch abscheidbare Hilfsstoffe enthalten, wie Pigmente, z. B. Ruß, Talkum, Titandioxid, Kaolin, basisches Bleichromat, Eisenoxidpigmente etc., lösliche Farbstoffe, Lösungsmittel,

Verlaufsverbesserer, Stabilisatoren, Härtungskatalysatoren, Antischaummittel sowie andere Hilfs- und Zusatzstoffe.

Zur kathodischen Elektrotauchlackierung wird im allgemeinen durch Verdünnen mit entionisiertem Wasser ein Feststoffgehalt des Elektrotauchbades von 5 bis 30 Gew.% eingestellt. Die Abscheidung erfolgt im allgemeinen bei Temperaturen von 15 bis 40°C während einer Zeit von 1 bis 3 Minuten und bei Bad-pH-Werten von 4,0 bis 8,5, vorzugsweise pH 5,0 bis 7,5, bei Abscheidungsspannungen zwischen 50 und 500 Volt. Nach dem Abspülen des auf dem elektrisch leitenden Körper kathodisch abgeschiedenen Films wird dieser bei etwa 140 bis 200°C 10 bis 30 Minuten, vorzugsweise bei 160 bis 180°C ca. 20 Minuten gehärtet.

Die folgenden Beispiele sollen die Erfindung näher erläutern, ohne sie zu beschränken. Die in den Beispielen genannten Teile und Prozente sind Gewichtsteile und Gewichtsprozente.

**Herstellungsbeispiele**

Herstellung der Komponente (A)

**Komponente $A_1$**

Zu 188 Teilen Phenol, 213 Teilen Acrylamid und 99 Teilen Paraformaldehyd werden 0,1 Teile Kupfer-Pulver gegeben und der Ansatz langsam erwärmt. Bei 80°C hat sich die Masse weitgehend verflüssigt. Es wird auf 115°C erhitzt und 10 Minuten bei dieser Temperatur gehalten, wobei der Ansatz völlig klar wird. Es wird auf 55 bis 60-C abgekühlt und 2 Teile Bortrifluoriddiethyletherat zugegeben. Die Temperatur wird unter anfänglichem Kühlen bei 60°C gehalten. Nach 1 Stunde werden nochmals 2 Teile Etherat zugegeben. Der Ansatz wird weitere 3 Stunden bei 60°C gehalten und danach mit 292 Teilen Isobutanol verdünnt. Die Temperatur wird bis zum Siedepunkt erhöht und innerhalb von 90 Minuten werden ca. 50 Teile Wasser ausgekreist. Das so erhaltene Produkt hat einen Festgehalt von 70 %.

**Komponente $A_2$**

Zu 94 Teilen Phenol und 202 Teilen Methylolacrylamid werden 6,3 Teile Paraformaldehyd und 0,1 Teile Kupfer-Pulver gegeben. Der Ansatz wird durch Erwärmen auf 100°C gelöst, dann auf 55°C gekühlt und 1 Teil Bortrifluoriddiethyletherat zugesetzt. Nach 1 Stunde bei 55 bis 60°C wird nochmals die gleiche Katalysatormenge zugegeben und 3 Stunden bei 60°C gehalten. Anschließend wird auf 115°C erhitzt und 30 Minuten bei dieser Temperatur gehalten, wobei etwa 20 Teile Wasser abdestillieren. Dann wird auf 80°C abgekühlt und mit 120 Teilen Ethylenglykol verdünnt.

**Komponente $A_3$**

Zu einer auf 0°C gekühlten Mischung aus 170 Teilen konz. Schwefelsäure und 60 Teilen Wasser werden 188 Teile Phenol gegeben. Anschließend werden portionsweise 505 Teile Methylolacrylamid eingetragen, wobei die Temperatur durch Kühlung im Eisbad bei 25 bis 30°C gehalten wird. Dabei werden nach Eintrag der halben Menge Methylolacrylamid 100 Teile konz. Schwefelsäure zufließen lassen und nach beendeter Zugabe nochmals 180 Teile. Es wird 3 Stunden bei Raumtemperatur gerührt, mit 1000 Teilen n-Butanol und 400 Teilen Toluol verdünnt und mehrmals mit 1000 Teilen Wasser gewaschen, bis das Waschwasser einen pH von 4 bis 5 aufweist. Anschließend wird ein Teil des Lösungsmittels im Vakuum abgezogen, so daß das Produkt einen Feststoffgehalt von 70 % aufweist.

**Zusatzvernetzer M, Mannichbase eines Polyphenols**

580 Teile einer Dimerfettsäure mit einer Jodzahl unter 5 und einem Trimerfettsäureanteil unter 4 % wird mit 572 Teilen Diphenolsäure (4,4-Bis-p-hydroxyphenylvaleriansäure), 240 Teilen Hexamethylendiamin und 100 Teilen Xylol unter Wasserauskreisen langsam auf 190°C erhitzt und 3 Stunden bei dieser Temperatur gehalten. Es wird mit 500 Teilen Butylglykol verdünnt, bei 80°C mit 490 Teilen Dibutylamin und 120 Teilen Paraformaldehyd versetzt und 3 Stunden bei 80°C gehalten. Das Produkt hat einen Festgehalt von 70 %.

## Herstellung der Bindemittel

### Beispiel 1

580 Teile Dimerfettsäure mit weniger als 4 % Trimeranteil und 210 Teile 2,2'-Aminoethoxyethanol werden innerhalb von 2 Stunden unter Abdestillieren des gebildeten Wassers auf 200°C erhitzt und 6 Stunden bei dieser Temperatur gehalten. Das resultierende Produkt, ein Diamiddiol, hat eine Restsäurezahl von 2,3 mg KOH/g. 740 Teile eines Diglycidylethers von Bisphenol A mit einem Molekulargewicht von ca. 1000 wird in 65 Teilen heißem Xylol gelöst, mit 279 Teilen des obigen Diamiddiols versetzt und auf 130°C erhitzt. Dann werden 1,5 Teile Dimethylbenzylamin zugesetzt. Das Gemisch wird bei 130°C gehalten, bis das Epoxidäquivalentgewicht des entstandenen kettenverlängerten Epoxidharzes auf 1000 angestiegen ist. In einem getrennten Gefäß werden inzwischen 1311 Teile der Komponente $A_2$ 500 Teile Diethanolamin und 2 Teile 2,6-Di-tert.-butyl-p-kresol 2 Stunden auf 90°C erhitzt. 431 Teile davon werden zusammen mit 15 Teilen Methyldiethanolamin, 211 Teilen Isobutanol und 211 Teilen Isopropanol zu dem oben genannten kettenverlängerten Epoxidharz gegeben und unter Rühren bei 70°C gehalten. Nach 15 bis 20 Stunden hat das Produkt die gewünschte Viskosität von 1000 mPas, gemessen bei 75°C mit einem Platten-Konus-Viskosimeter, erreicht. Durch Zugabe von 30 Teilen Eisessig wird das Produkt wasserdispergierbar.

### Beispiel 2

564 Teile eines Epoxidharzes auf Basis von Bisphenol A mit einem Epoxidäquivalentgewicht von 190, 137 Teile Bisphenol A und 247,5 Teile eines Polycaprolactondiols mit einem mittleren Molekulargewicht von 550 und 260,5 Teile Xylol werden zum Rückfluß erhitzt und im Ansatz enthaltenes Wasser ausgekreist. Anschließend werden 200 Teile Xylol unter vermindertem Druck abgezogen. Es werden 1,25 Teile Dimethylbenzylamin bei 150°C zugegeben und 1 Stunde bei 160°C gehalten. Dann wird auf 130°C gekühlt, mit weiteren 1,9 Teilen Dimethylbenzylamin versetzt und so lange bei 130°C gehalten, bis der Epoxidwert auf 0,11 Epoxidgruppen/100 g gefallen ist, wozu 2 bis 4 Stunden erforderlich sind. Das Produkt wird im folgenden als Komponente $B_2$ bezeichnet.

In einem getrennten Gefäß werden 187,5 Teile der Komponente $A_2$ 71,5 Teile Diethanolamin und 0,2 Teile Hydrochinonmonomethylether 2 Stunden auf 95°C erhitzt, wobei an 68 % der Doppelbindungen Amin addiert wird.

Zu 250 Teilen der Komponente $B_2$ werden 109,5 Teile des Aminaddukts, 22 Teile Ethylglykol, 22 Teile Hexylglykol, 54 Teile Isobutanol und 2,6 Teile Dimethylethanolamin gegeben und 15 Stunden bei 70°C gehalten. Das Produkt hat eine Viskosität von 1200 mPas, gemessen bei 75°C und eine Aminzahl von 55 mg KOH/g, bezogen auf Festharz. Das Produkt wird durch Zusatz von 5,5 Teilen Eisessig wasserdispergierbar.

### Beispiel 3

Zu 120 Teilen der Komponente $A_1$ werden 43 Teile Diethanolamin und 0,2 Teile Hydrochinonmonomethylether gegeben und 2 Stunden auf 95°C erhitzt.

Zu 109 Teilen dieses Adduktes werden 300 Teile der in Beispiel 2 beschriebenen Komponente $B_2$, 56,6 Teile Isobutanol, 56,6 Teile Isopropanol und 2,15 Teile Dimethylethanolamin gegeben. Nach 20 Stunden bei 70°C hat das Produkt eine Viskosität von 900 bis 1100 mPas. Seine Aminzahl beträgt 45,3 mg KOH/g Festharz. Nach Zusatz von 7 Teilen Eisessig ist das Produkt wasserdispergierbar.

### Beispiel 4

970 Teile eines Epoxidharzes auf Basis von Bisphenol A mit einem Äquivalentgewicht von 485, 275 Teile eines Polycaprolactondiols mit einem OH-Äquivalentgewicht von 275 und 78 Teile Xylol werden auf 130°C erhitzt und unter leicht vermindertem Druck innerhalb von 30 Minuten Wasser ausgekreist. Die Mischung wird anschließend auf 125°C erwärmt und nach Zugabe von 3 Teilen Dimethylbenzylamin bei 130°C gerührt, bis der Epoxidwert auf 0,092 Epoxidgruppen/ 100 g abgesunken ist, wozu 2 bis 5 Stunden benötigt werden.

In einem getrennten Gefäß werden 495 Teile der Komponente $A_3$, 184 Teile Diethanolamin und 0,5 Teile Hydrochinonmonomethylether 2 Stunden auf 95°C erwärmt.

Zu 185 Teilen dieses Addukts werden 532 Teile des obigen elastifizierten Epoxidharzes und 203 Teile Isopropanol gegeben und 15 Stunden auf 85°C erwärmt. Das Produkt hat einen Festgehalt von 71 %. Nach Zugabe von 14,5 Teilen Eisessig ist das Bindemittel wasserverdünnbar.

**Prüfung der Bindemittel**

Es werden jeweils 290 Teile Bindemittellösung mit 710 Teilen vollentsalztem Wasser auf 20 % Festkörper verdünnt, mit 40 Teilen Kaolin, 6 Teilen basischem Bleisilikatpigment und 4 Teilen Ruß versetzt und nach Zugabe von Mahlkörpern 24 Stunden in der Kugelmühle gemahlen. Dann werden die Mahlkörper abgetrennt. Durch Zugabe von 666 Teilen vollentsalztem Wasser wird ein Badfeststoffgehalt von 15 % eingestellt. Die Bäder werden 48 Stunden bei 40°C gerührt. An kathodisch geschalteten, zinkphosphatierten Prüftafeln aus Stahl werden Lackfilme innerhalb von 2 Minuten bei der angegebenen Spannung abgeschieden und 20 Minuten bei 180°C eingebrannt. Anschließend werden die Bleche geritzt und dem ASTM-Salzsprühtest (DIN SS 50021) unterworfen.

Ergebnis der Bindemittelprüfung, 17 µ Schichtstärke

| Bindemittel | | pH | Abscheide-spannung V | Schlag-tiefung in x lb | 480 h Salzsprühtest Unterwandung am Schnitt |
|---|---|---|---|---|---|
| Beispiel 1 | 80 % | 6,5 | 250 | 160 | 0,5 - 1 mm |
| Zusatzvernetzer M | 20 % | | | | |
| Beispiel 2* | 100 % | 7,0 | 250 | 60 | 0 - 0,5 mm |
| Beispiel 2 | 80 % | 7,1 | 220 | 160 | 0,5 - 1 mm |
| Zusatzvernetzer M | 20 % | | | | |
| Beispiel 3 | 80 % | 6,9 | 230 | 120 | 0,5 - 1 mm |
| Zusatzvernetzer M | 20 % | | | | |
| Beispiel 4* | 100 % | 6,2 | 300 | 120 | 0 - 0,5 mm |

* Bäder enthalten 50 ppm Mangan als Manganacetat

**Patentansprüche**

1. Verfahren zur Herstellung von härtbaren, stickstoffbasische Gruppen tragenden Polyadditionsprodukten, die nach Protonierung mit Säuren wasserdispergierbar und als Bindemittel für kationische Elektrotauchlecke geeignet sind, wobei die Polyadditionsprodukte aus

(A) Mono- und/oder Polyphenolen, welche am aromatischen Kern Gruppierungen der allgemeinen Formel (I)

$$-CH_2-NH-\overset{\overset{O}{\|}}{C}-CR^1=CHR^2 \qquad (I)$$

tragen, worin $R^1$ und $R^2$ untereinander gleich oder verschieden sind und für Wasserstoff oder eine Methylgruppe stehen,

(B) Aminen mit mindestens einer primären und/oder sekundären Aminogruppe und

(C) Epoxidverbindungen mit einem Molekulargewicht von maximal 5000 hergestellt werden, die Komponenten (A) und (C) in solchen Mengen eingesetzt werden, daß das Verhältnis der phenolischen Hydroxylgruppen von (A) zu Epoxidgruppen von (C) 1:0,5 bis 1:2,5 beträgt und das Amin (B) in einer solchen Menge eingesetzt wird, daß das resultierende Polyadditionsprodukt aus (A), (B) und (C) 0,1 bis 5 Gew.% basischen Stickstoff enthält, und entweder zuerst Komponente (A) mit Komponente (B) zur Reaktion gebracht und das erhaltene Reaktionsprodukt dann mit Komponente (C) umgesetzt wird, oder zuerst Komponente (A) mit Komponente (C) zur Reaktion gebracht und das erhaltene Reaktionsprodukt dann mit Komponente (B) umgesetzt wird, dadurch gekennzeichnet, daß man als Epoxidverbindungen (C) Umsetzungsprodukte aus aromatischen Epoxidharzen und polyfunktionellen Alkoholen, Carbonsäuren und/oder SH-Verbindungen verwendet, wobei diese polyfunktionellen Alkohole, Carbonsäuren und/oder SH-Verbindungen Molekulargewichte zwischen 530 und 3000 aufweisen und mit den aromatischen Epoxidharzen in solchen Mengenverhältnissen umgesetzt worden sind, daß auf jede Epoxidgruppe 0,1 bis 0,77 Hydroxyl-, Carboxyl- oder SH-Gruppen oder Gemische dieser Gruppen kommen.

2. Verfahren nach Anspruch 1, dadurch gekennzeichnet, daß als polyfunktioneller Alkohol ein Diol mit zwei primären Hydroxylgruppen verwendet wird.

3. Verfahren nach Anspruch 2, dadurch gekennzeichnet, daß als Diol mit zwei primären Hydroxylgruppen ein Polyether-, Polyester-, Polyamid- oder Polyurethandiol verwendet wird.

4. Verfahren nach einem der Ansprüche 1 bis 3, dadurch gekennzeichnet, daß als aromatische Epoxidharze Diglycidylether des Bisphenol A, erhalten aus Bisphenol A und Epichlorhydrin, verwendet werden.

5. Verfahren nach einem der Ansprüche 1 bis 4, dadurch gekennzeichnet, daß als Mono- und/oder Polyphenole (A) mit Gruppierungen der allgemeinen Formel (I) ein Umsetzungsprodukt aus Mono- und/oder

Polyphenol und einer Verbindung der allgemeinen Formel (II)

$$X-CH_2-NH-\overset{O}{\overset{\|}{C}}-CR^1=CHR^2 \qquad (II),$$

verwendet wird, worin X für OH, Halogen oder eine Alkoxylgruppe mit 1 bis 8 Kohlenstoffatomen steht, $R^1$ und $R^2$ untereinander gleich oder verschieden sind und für Wasserstoff oder eine Methylgruppe stehen.

6. Verfahren nach Anspruch 5, dadurch gekennzeichnet, daß als Verbindung der allgemeinen Formel (II) N-Methylolacrylamid verwendet wird.

7. Verfahren nach Anspruch 6, dadurch gekennzeichnet, daß anstatt N-Methylolacrylamid ein Gemisch aus Acrylamid und Formaldehyd oder Formaldehyd liefernden Substanzen verwendet wird.

8. Verfahren nach einem der Ansprüche 5 bis 7, dadurch gekennzeichnet, daß als Monophenol Phenol verwendet wird.

9. Verfahren nach einem der Ansprüche 1 bis 8, dadurch gekennzeichnet, daß als Komponente (B) ein sekundäres Amin, welches eine oder zwei Hydroxyalkylgruppen enthält, verwendet wird.

10. Verwendung der nach einem Verfahren gemäß einem der Ansprüche 1 bis 9 hergestellten Polyadditionsprodukte zur Herstellung von Überzügen.

11. Verwendung der nach einem Verfahren gemäß einem der Ansprüche 1 bis hergestellten Polyadditionsprodukte nach Protonierung mit Säure als Bindemittel für die kathodische Elektrotauchlackierung.

## Claims

1. A process for the preparation of a curable polyadduct which carries basic nitrogen groups, is water-dispersible after protonation with an acid, and is useful as a binder for cationic electrocoating finishes, where the polyadduct is prepared from

(A) monophenols and/or polyphenols which carry, on the aromatic nucleus, groups of the general formula (I)

$$-CH_2-NH-\overset{O}{\overset{\|}{C}}-CR^1=CHR^2 \qquad (I),$$

where $R^1$ and $R^2$ are identical or different and are each hydrogen or methyl,

(B) amines possessing at least one primary and/or secondary amino group, and

(C) epoxide compounds having a molecular weight of not more than 5,000, components (A) and (C) are used in such amounts that the ratio of phenolic hydroxyl groups of (A) to epoxide groups of (C) is from 1: 0.5 to 1: 2.5, amine (B) is used in such an amount that the resulting polyadduct of (A), (B) and (C) contains from 0.1 to 5 % by weight of basic nitrogen, and either component (A) is first reacted with component (B) and the resulting product is then reacted with component (C), or component (A) is first reacted with component (C) and the resulting product is then reacted with component (B), wherein the epoxide compounds (C) used are reaction products of aromatic epoxy resins with polyfunctional alcohols, polyfunctional carboxylic acids and/or polyfunctional SH compounds, these polyfunctional alcohols, polyfunctional carboxylic acids and/or polyfunctional SH compounds having a molecular weight of from 530 to 3,000 and having been reacted with the aromatic epoxy resins in such a ratio that from 0.1 to 0.77 hydroxyl, carboxyl or SH group, individually or as a mixture with one another, is present per epoxide group.

2. A process as claimed in claim 1, wherein the polyfunctional alcohol used is a diol possessing two primary hydroxyl groups.

3. A process as claimed in claim 2, wherein a polyetherdiol, polyesterdiol, polyamidediol or polyurethanediol is used as the diol possessing two primary hydroxyl groups.

4. A process as claimed in any of claims 1 to 3, wherein the aromatic epoxy resin used is a diglycidyl ether of bisphenol A, obtained from bisphenol A and epichlorohydrin.

5. A process as claimed in any of claims 1 to 4, wherein, as the monophenol and/or polyphenol (A) possessing groups of the general formula (I), a reaction product of a monophenol and/or polyphenol with a compound of the general formula (II)

$$X-CH_2-NH-\overset{O}{\overset{\|}{C}}-CR^1=CHR^2 \qquad (II),$$

where X is OH, halogen, or alkoxy of 1 to 8 carbon atoms, and $R^1$ and $R^2$ are identical or different and are each hydrogen or methyl, is used.

6. A process as claimed in claim 5, wherein N-methylolacrylamide is used as the compound of the general formula (II).

7. A process as claimed in claim 6, wherein, instead of N-methylolacrylamide, a mixture of acrylamide with formaldehyde or with a formaldehyde donor is used.

8. A process as claimed in any of claims 5 to 7, wherein the monophenol used is phenol.

9. A process as claimed in any of claims 1 to 8, wherein a secondary amine which contains one or two hydroxyalkyl groups is used as component (B).

10. The use of a polyadduct prepared by a process as claimed in any of claims 1 to 9 for the production of coatings.

11. The use of a polyadduct prepared by a process as claimed in any of claims 1 to 9, after protonation with an acid, as binder for cathodic electrocoating.

**Revendications**

1. Procédé de préparation de produits de polyaddition portant des radicaux azotés basiques, durcissables, qui deviennent dispersibles dans l'eau après protonation avec des acides et conviennent à l'emploi comme liants pour des laques ou vernis à appliquer par trempage électrophorétique, cationiques, où les produits de polyaddition se préparent à partir

(A) de mono- et/ou polyphénols qui portent, sur le noyau aromatique, des groupements de la formule générale (I)

$$-CH_2-NH-\overset{O}{\overset{\|}{C}}-CR^1=CHR^2 \qquad (I)$$

dans laquelle $R_1$ et $R_2$ sont mutuellement identiques ou différents et représentent chacun un atome d'hydrogène ou le radical méthyle,

(B) d'amines comportant au moins un radical amino primaire et/ou secondaire et

(C) de composés époxydes d'un poids moléculaire de 5000 au maximum, les composantes (A) et (C) étant mises en oeuvre en proportions telles que le rapport des radicaux hydroxyle phénoliques de la composante (A) aux radicaux époxyde de la composante (C) varie de 1 : 0,5 à 1 : 2,5, l'amine (B) étant mise en oeuvre en proportions telles que le produit qui résulte de la polyaddition de (A), (B) et (C) contienne 0,1 à 5 % en poids d'azote basique et où on fait réagir en premier lieu la composante (A) sur la composante (B) pour ensuite faire entrer le produit réactionnel ainsi obtenu en réaction sur la composante (C), ou bien on fait d'abord réagir la composante (A) sur la composante (C) et on fait ensuite réagir le produit réactionnel ainsi obtenu sur la composante (B), caractérisé en ce qu'à titre de composés époxydes (C), on utilise des produits de réaction de résines époxydes aromatiques et de composés SH, d'acides carboxyliques et/ou d'alcools polyfonctionnels, où ces composés SH, acides carboxyliques et/ou alcools polyfonctionnels présentent des poids moléculaires qui fluctuent de 530 à 3000 et sont mis en réaction sur les résines époxydes aromatiques en proportions quantitatives telles que, sur chaque radical époxyde, apparaisse 0,1 à 0,77 radicaux SH, carboxyle, hydroxyle ou leurs mélanges.

2. Procédé suivant la revendication 1, caractérisé en ce que l'on utilise un diol comportant 2 radicaux hydroxyle primaires à titre d'alcool polyfonctionnel.

3. Procédé suivant la revendication 2, caractérisé en ce que l'on utilise un polyéther-, polyester-, polyamido- ou polyuréthanne-diol à titre de diol avec deux radicaux hydroxyle primaires.

4. Procédé suivant l'une quelconque des revendication 1 à 3, caractérisé en ce que l'on utilise l'éther diglycidylique du bisphénol A obtenu au départ du bisphénol A et de l'épichlorhydrine, à titre de résines époxydes aromatiques.

5. Procédé suivant l'une quelconque des revendications 1 à 4, caractérisé en ce que, à titre de mono- et/ou polyphénols (A) avec des radicaux ou groupements de la formule générale (I), on utilise un produit de réaction d'un mono- et/ou polyphénol et d'un composé de la formule générale (II)

$$X-CH_2-NH-\overset{O}{\overset{\|}{C}}-CR^1=CHR^2 \qquad (II)$$

dans laquelle X représente le radical OH, un atome d'halogène ou un radical alcoxyle comportant de 1 à 8 atomes de carbone, $R_1$ et $R_2$ sont mutuellement identiques ou différents et représentent chacun un atome d'hydrogène ou le radical méthyle.

6. Procédé suivant la revendication 5, caractérisé en ce que l'on utilise le N-méthylolacrylamide à titre de composé de la formule générale (II).

7. Procédé suivant la revendication 6, caractérisé en ce qu'au lieu du N-méthylolacrylamide, on utilise un mélange d'acrylamide et de formaldéhyde ou de substances engendrant du formaldéhyde.

8. Procédé suivant l'une quelconque des revendications 5 à 7, caractérisé en ce que l'on utilise le phénol à titre de monophénol.

9. Procédé suivant l'une quelconque des revendications 1 à 8, caractérisé en ce que l'on utilise une amine secondaire qui contient un ou deux radicaux hydroxyalkyle à titre de composante (B).

10. Mise en oeuvre des produits de polyaddition préparés suivant le procédé conforme à l'une quelconque des revendications 1 à 9 en vue de la préparation de revêtements.

11. Mise en oeuvre des produits de polyaddition préparés par le procédé conforme à l'une quelconque des revendications 1 à 9 à titre de liants pour le laquage ou vernissage par trempage électrophorétique.